(19) Europäisches Patentamt
European Patent Office
Office européen des brevets

(11) **EP 2 545 730 B1**

(12) **EUROPEAN PATENT SPECIFICATION**

(45) Date of publication and mention
of the grant of the patent:
**07.09.2016 Bulletin 2016/36**

(21) Application number: **11753648.2**

(22) Date of filing: **11.03.2011**

(51) Int Cl.:
***H04L 12/70*** *(2013.01)*

(86) International application number:
**PCT/KR2011/001726**

(87) International publication number:
**WO 2011/112043 (15.09.2011 Gazette 2011/37)**

(54) **METHOD FOR REPORTING QOS CONTROL-RELATED INFORMATION IN NETWORK AND NETWORK ENTITY THEREFOR**

VERFAHREN ZUR ÜBERMITTLUNG VON QOS-STEUERUNGSINFORMATIONEN IN EINEM NETZWERK UND NETZWERKEINHEIT DAFÜR

PROCÉDÉ POUR RAPPORTER DES INFORMATIONS SUR LA COMMANDE DE QOS DANS UN RÉSEAU ET ENTITÉ DE RÉSEAU CORRESPONDANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2010 KR 20100022497**

(43) Date of publication of application:
**16.01.2013 Bulletin 2013/03**

(73) Proprietors:
• **Samsung Electronics Co., Ltd**
**Gyeonggi-do 443-742 (KR)**
• **University-Industry Cooperation Group of Kyung Hee University**
**Gyeonggi-do 446-701 (KR)**

(72) Inventors:
• **SUH, Doug-Young**
**Seongnam-si**
**Gyeonggi-do 463-779 (KR)**

• **PARK, Gwang-Hoon**
**Seongnam-si**
**Gyeonggi-do 463-831 (KR)**
• **KIM, Kyu-Heon**
**Seoul 135-101 (KR)**

(74) Representative: **Jenkins, Richard Gavin**
**HGF Limited**
**Saviour House**
**9 St Saviourgate**
**York YO1 8NQ (GB)**

(56) References cited:
WO-A2-2007/060521    KR-A- 20070 051 044
KR-A- 20070 120 257    US-A1- 2004 066 753
US-A1- 2007 280 127    US-A1- 2008 049 630
US-A1- 2008 137 552    US-A1- 2009 059 937

EP 2 545 730 B1

**Description**

**Technical Field**

The present invention relates generally to reporting Quality of Service (QoS) related information in a network, and more particularly, to a method for improving quality of real-time multimedia services using network link and/or node information, and an apparatus using the same.

**Background Art**

Parameters for controlling QoS of multimedia services include traffic and QoS parameters. The traffic parameters include a bandwidth and a buffer size, while the QoS parameters include a delay and a loss ratio. The traffic parameters are defined in a Resource reSerVation Protocol (RSVP) for allocating resources to a specific flow in a network, and the QoS parameters are defined in a Real-time Transport Control Protocol (RTCP) for maintaining QoS of a Real-time Transport Protocol (RTP). Details of RFC 2205 RSVP and RFC 3550 RTCP standards are described in below in order to provide an example of the traffic and QoS parameters, respectively.

RTCP (RFC3550 RTP Section 6.4.1)

RTCP is an out-of-band control protocol for unicast/multicast applications. RTCP allows RTP entities to monitor data delivery and to have minimum control functionality.
RTCP-related parameters may be exchanged between senders and receivers. When an audio conference session, in which several participants take part, is considered, a new receiver should receive Source DEScription (SDES), Canonical NAME (CNAME) and the like from senders.
RTCP has the following four objectives.

    1. Feedback of end-to-end network quality,
    2. Carriers of CNAME (canonical name to associate multiple data streams),
    3. Bitrate control for RTCP packets, and
    4. Minimal session control information.

RTCP packets may be classified into Sender Report (SR), Receiver Report (RR), SDES_for_CNAME, BYE, APP packets. An RTCP interval is determined to provide statistic resolutions, and determined such that its session bandwidth falls within a limited range.
An SR/RR packet has 0 to 31 reception blocks. Every Synchronization SouRCe (SSRC with a participant identifier) has one reception block. This is not related to Contribution SouRCe (CSRC), which is a number for distinguishing each source from an output of a mixer having its own unique SSRC.

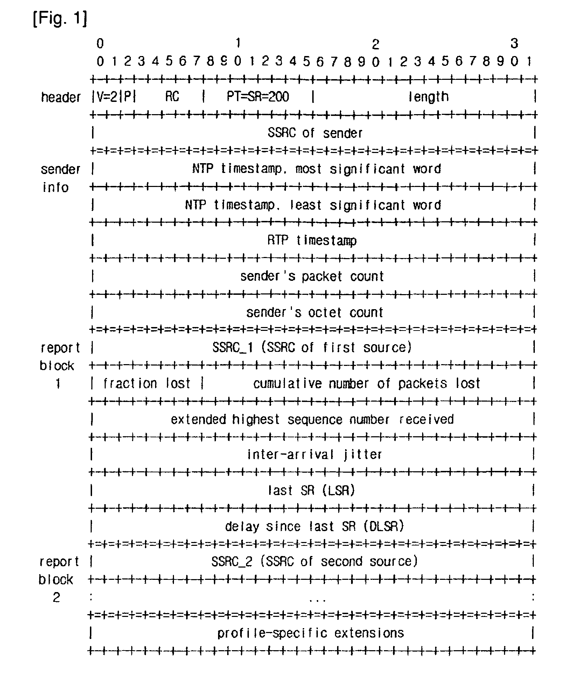

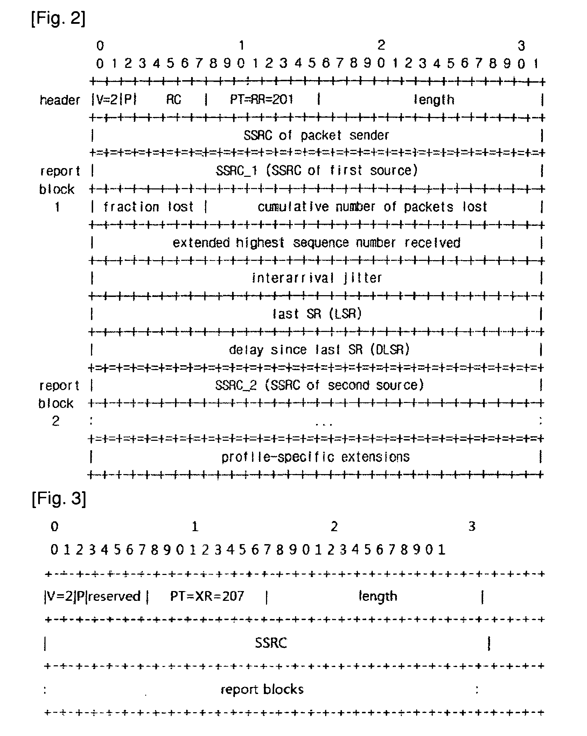

FIG. 1 illustrates a structure of a general SR packet used in a network. FIG. 2 illustrates a structure of a general RR packet used in a network. For a detailed description of an SR packet and an RR packet, reference can be made to the RFC 3550 RTCP standard.

RTCP XR

A Loss Run-Length Encoding (RLE) report block in the existing RFC3611 RTP Control Protocol Extended Reports (RTCP XR) transports information about a loss of an individual RPT packet for an RTCP interval. Accordingly, the loss is repaired by running Forward Error Correction (FEC) [RFC5109] and/or retransmission [RFC4588]. Unlike in RFC3611, in Draft-ietf-avt-post-repair-rtcp-xr-07 (2010) now under standardization, by transporting information about Loss RLE of post-loss-repair, an RTP sender is allowed to identify the effect of loss repair.
In the Draft-ietf-avt-post-repair-rtcp-xr-07 (2010), a new report block type is suggested and registered. The report block type is similar to that of RFC3611.
FIG. 3 illustrates a structure of a general RTCP XR packet used in a network.
Referring to FIG. 3, a "V" field represents a version of the RTP, and a "P" field represents padding. If the "P" field is set, an RTCP XR packet includes additional padding octets at the end thereof. Semantics of the "P" field are the same as those of a padding field in an SR packet. A "PT" field represents a packet type, and includes type information (a constant=207) for identifying an RTCP XR packet. A "length" field represents a length of an RTCP XR packet, and an "SSRC" field represents a synchronization source identifier for an originator of an RTCP XR packet. A "report blocks" field represents zero (0) or multiple extended report blocks with a variable length.

RSVP

RFC 2205 RSVP is a protocol for reserving resources in a router. In accordance with this standard, information about traffic parameters in use is exchanged using a PATH packet (also called a PATH message) transmitted first by a sender and a RESV packet (also called a RESV message) transmitted by a receiver in response. Optionally, a router may provide information about the presently available resources with an ADSPEC packet. The PATH packet includes TSPEC associated with characteristics of a data flow, and the RESV packet includes FLOWSPEC associated with resource reservation information. In case of a controlled load, the same double leaky bucket factors are used for both TSPEC and FLOWSPEC. In FLOWSPEC, if [Rate R, Slack Term S] is added, it represents a guaranteed service. Here, Slack Term S represents a difference between a desired delay value and a delay value obtained by resource reservation. This approach is used for both call setup and call control. As a call control method, a bandwidth reduction procedure is defined in RFC4495.

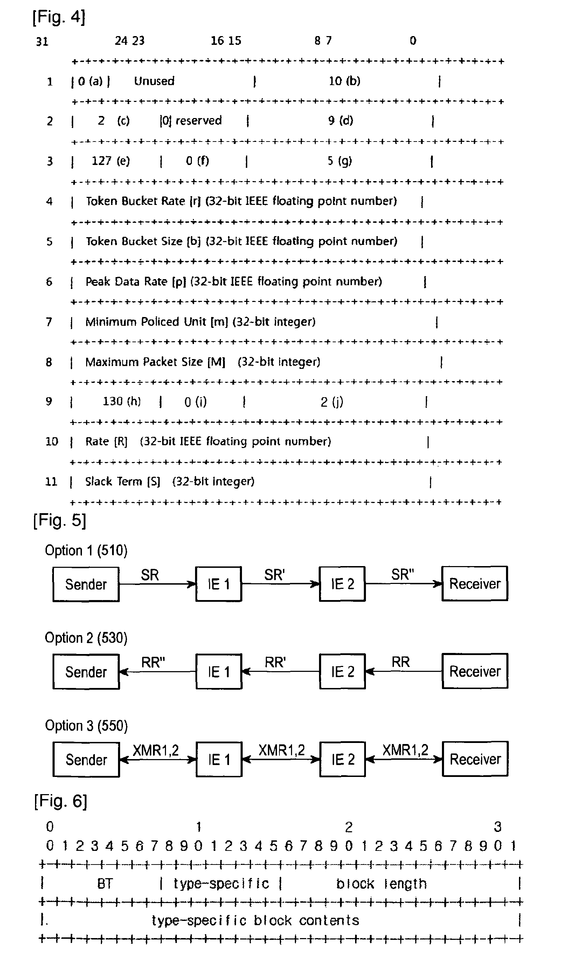

FLOWSPEC of a guaranteed service, defined in RFC2212, is shown in FIG. 4. FIG. 4 illustrates a FLOWSPEC structure of a RESV packet for RSVP. The FLOWSPEC structure illustrated in FIG. 4 has three kinds of bitrates, including, for example, a Token Bucket Rate r, a Peak Data Rate p, and a Rate R. These bitrates may define individual leaky buckets by being paired with a bucket size, a packet size, and a slack term, respectively. For a detailed description of the FLOWSPEC structure, reference can be made to RFC2212.

To improve the quality of multimedia services, it is important to control their QoS according to the network conditions. In the RTP standard, end-to-end QoS is measured using the RTCP. A sender transmits an RTCP SR packet, and upon receipt of the SR packet, a receiver transmits QoS having been calculated up to now, in an RTCP RR packet. The sender controls the quality of multimedia services according to the QoS measured using the RTCP. Specifically, if a delay increases, the sender reduces the bitrate, and if a packet loss increases, the sender uses the existing method to prevent the packet loss.

However, if the existing RTCP is used, end-to-end QoS parameters are measured, considering a lower layer under the network layer as a black box. Regarding the measurement of the RTCP parameters, feedback thereof is slow because it is a measurement for delay, loss, etc., causing uncertainty.

The existing method of measuring a round-trip delay or a round-trip time using the RTCP, dividing it in half, and using it as a one-way delay, needs to be improved in mobile networks because uplink and downlink of a mobile channel are totally different from each other in terms of the protocol and characteristics. Even in the case of a packet loss ratio, since the packet loss occurs at random, its value is uncertain. To reduce the uncertainty, the measurement time should be increased, which, however, undesirably causes a delay in feedback.

US2007280127 describes a mechanism for monitoring quality of service (QoS) and traffic statistics in segments of a voice over Internet Protocol (VoIP) network. It describes establishing a secondary control packet mechanism in parallel to a conventional end-to-end control packet mechanism (i.e. RTCP) to monitor one or more "legs" of a multi-node VoIP network.

US2004066753 describes the monitoring of RTP streams using a network analyzer at an intermediate point between endpoints in a network. RTCP packets representing RTP streams having the worst-case network parameters are selected and monitored.

**Disclosure of Invention**

**Technical Problem**

The present invention has been made to address at least the above problems and/or disadvantages and to provide at least the advantages described below. Accordingly, an aspect of the present invention provides a method for adaptively reporting QoS control-related information in a network, and a network entity therefor.

Another aspect of the present invention provides a method for reporting QoS control-related information to another network entity by an intermediate network, and an intermediate network therefor.

Further, another aspect of the present invention provides a structure of a report packet for adaptively reporting QoS control-related information according to the network environment in a network entity.

**Solution to Problem**

According to one aspect of the present invention, a method is provided in claim 1 for reporting Quality of Service (QoS) control-related information in a network.

According to another aspect of the present invention, a network entity is provided in claim 8 for reporting Quality of Service (QoS) control-related information in a network.

**Brief Description of Drawings**

The above and other aspects, features and advantages of the present invention will be more apparent from the following description when taken in conjunction with the accompanying drawings, in which:

FIG. 1 is a diagram illustrating a structure of a general SR packet used in a network;
FIG. 2 is a diagram illustrating a structure of a general RR packet used in a network;
FIG. 3 is a diagram illustrating a structure of a general RTCP XR packet used in a network;
FIG. 4 is a diagram illustrating a FLOWSPEC structure of a RESV packet for RSVP;
FIG. 5 is a diagram illustrating three different options for a method of transmitting an XMR, according to an embodiment of the present invention;
FIG. 6 is a diagram illustrating a general structure of a report block, according to an embodiment of the present invention;
FIG. 7 is a diagram illustrating 4 LSB bits of an IPv6 flow label for stream identification, according to an embodiment of the present invention;
FIG. 8 is a diagram illustrating a structure of an RTCP XMR packet, according to an embodiment of the present invention;
FIG. 9 is a diagram illustrating a structure of an RTCP XMR block, according to an embodiment of the present invention;
FIG. 10 is a diagram illustrating a configuration of a network entity that generates an RTCP XMR block, according to an embodiment of the present invention; and
FIG. 11 is a diagram illustrating a configuration of a network entity that performs QoS control using RTCP XMR information, according to an embodiment of the present invention.

**Mode for the Invention**

Embodiments of the present invention are described in detail with reference to the accompanying drawings. The same or similar components may be designated by the same or similar reference numerals although they are illustrated in different drawings. In the following description, specific details such as detailed configuration and components are merely provided to assist the overall understanding of embodiments of the present invention. Detailed descriptions of constructions or processes known in the art may be omitted to avoid obscuring the subject matter of the present invention.

An embodiment of the present invention provides a method for adaptively reporting QoS control-related information between network entities, for QoS control that is more adaptive to the network environment. This embodiment of the present invention also provides a method in which an Intermediate network Entity (IE), located within an end-to-end path in a network, reports QoS control-related information (or QoS-related information) to another network entity performing QoS control. Further, the embodiment of the present invention provides a structure of a report packet, by which a network entity adaptively reports QoS-related information according to the network environment.

In an embodiment of the present invention, for example, the IE may be a mixer and a translator in the RFC 3550, a Media Aware Network Entity (MANE) in the MPEG/ JVT, or a Base Station (BS) or an Access Point (AP) in the wireless communication system.

An embodiment of the present invention may be used to improve QoS in various multimedia services including real-time multimedia services. The real-time multimedia services include conversational services, such as video conference and video call; streaming services, such as Video-On-Demand (VOD); and broadcast services, such as broadcast/multicast. The channel state significantly affecting the entire QoS is transferred to a sender and/or a receiver located in a network path, or to a network entity controlling QoS in the network path, thereby making adaptive QoS control possible. Herein, the term 'link' may refer to, for example, a channel between a BS and a Mobile Station (MS) in the cellular network and IEEE802.16 WiBro network, and a channel between an AP and a terminal in the IEEE802.11 WLAN.

An embodiment of the present invention provides a new RTCP packet or RTCP report block (hereinafter referred to as an RTCP extended interMediate Report (XMR) packet or XMR block) for adaptively reporting information for QoS control. The XMR packet or XMR block will be referred to as an XMR. The XMR may be implemented by being transported as an independent packet like the SR packet and the RR packet, or by adding a report block to the existing RTCP packet.

The XMR enables network entities (i.e., IEs), located within an end-to-end path, to merge and report situations of a Media Access Control (MAC)/Physical (PHY) layer and a network layer so as to use characteristics of nodes and links (channels) determining the end-to-end QoS, for adaptive QoS control.

The IE may perform (i) 'an operation significantly affecting the end-to-end QoS', or may detect (ii) 'parameters significantly affecting the end-to-end QoS'.

The phrase 'The operation significantly affecting the end-to-end QoS' may include filtering and extraction performed in a network.

The term 'filtering' refers to blocking forwarding of at least one multiple media stream. For example, in an AV service consisting of an audio stream and a video stream, when an available bitrate (or available bandwidth) becomes low because of the poor network situation, the filtering may forward only the audio stream without forwarding the video stream. In case of multicast transmission, a device connected to one side branch of the network needs to undergo filtering even when it has no video functionality.

The term 'extraction' refers to blocking forwarding of a stream of more than one layer in one media consisting of multi-layer streams. For example, in a video service consisting of multi-layer scalable video streams, when an available bitrate becomes low because of the poor network situation, the extraction may forward only a lower layer stream(s) without forwarding an upper layer stream(s). The upper layer stream may include a high-resolution video stream, while the lower layer stream may include a low-resolution video stream. In the case of multicast transmission in a combined wired/wireless network, one side branch extending to the wireless communication system needs to undergo extraction even when it forwards only a lower layer stream(s).

An IE capable of detecting 'the parameters significantly affecting the end-to-end QoS' may include, for example, a BS or an AP in the wireless communication system, as described above. These IEs are responsible for the last hop most significantly affecting the end-to-end QoS. The IE measures the current state variables of a channel assigned to each RTP stream or each service, and the channel state variables include Queue (buffer) fullness, Carrier-to-Interference plus Noise Ratio (CINR), Signal-to-Interference plus Noise Ratio (SINR), Received Signal Strength Indication (RSSI), Modulation and Coding Scheme (MCS) level, Adaptive Modulation and Coding (AMC) level, Retry (the number of frame retransmissions), hybrid Automatic Repeat reQuest (ARQ) level, etc. Use of these channel state variables may help estimate the end-to-end QoS. Because different channel approaches use different parameters, the channel state variables should be calculated in a unified unit using these parameters.

The channel state variables in a unified unit may be classified into traffic parameters and QoS parameters.

The traffic parameters represent characteristics of streams to be transported, and variables specified in the TSPEC defined in the RFC2205 RSVP may be used for them. The traffic parameters may include, for example, a token rate, a bucket depth, a peak rate, a maximum packet size, etc.

The QoS parameters represent characteristics of the channel or network, and include delay/jitter level, throughout, loss/error rate, etc. For the QoS parameters, variables included in VoIP metrics may be used in RFC3611. The calculated QoS parameters are delivered to a sender, a receiver, or another IE using an XMR. In the case of multicast transmission, the QoS parameters may be delivered to a downstream receiver. If a network entity controlling QoS is present within the end-to-end path, like the MANE, the QoS parameters may be delivered to and used in the network entity.

A detailed description is provided of three different options (Options 1, 2, 3) of transmitting an XMR in an embodiment of the present invention, and of various different examples in which an XMR is configured in an XMR packet, using an IP address, an XMR report interval, an XMR block structure, and the like.

Option 1 is to update an SR packet transmitted from a sender by adding a report block in the SR packet.

Option 2 is to update an RR packet transmitted from a receiver by adding a report block in the RR packet.

Option 3 is to allow an IE to make and transmit an XMR packet.

Option 1 is suitable for multicast, while Option 2 is suitable for unicast. The SR and the RR refer to a Sender Report (SR) packet and a Receiver Report (RR) packet, as defined in the RFC 3550.

FIG. 5 illustrates the three different options for a method of transmitting an XMR, according to an embodiment of the present invention.

Referring to FIG. 5, in Option 1 510, an IE1 updates an SR into an SR' by adding new information in an SR packet. The information added in the SR packet includes factors affecting an operation in which the IE1 forwards an RTP packet. This information reflects the internal situations of the IE1 and the current state of an egress link towards the receiver. For example, if the IE1 is a router, the IE1 adds a delay level, a packet discarding ratio, and a bitrate (or bandwidth) allocable to a session in an appropriate form according to the congestion level. As another example, if an IE2 is an Long Term Evolution (LTE) BS (or LTE Node B), the IE2 measures the link situation between the Node B and the receiver and the scheduling situation in the Node B, and adds a delay level for RTP packets of a session, a packet loss ratio, and a bitrate (or bandwidth) allocable to the session, in an SR" in an appropriate form. If the receiver can measure the last link situation and make an RTCP XMR report block, and there is no IE capable of measuring and making the block, the receiver makes an XMR report block for an ingress channel, and delivers the block to a sender. In this case, the receiver merges XMR report blocks on the entire path, makes a merged XMR report block, adds it in an RR packet, and delivers the RR packet to the MANE or sender.

When Option 2 530 is used, QoS-related information included in an RR' or an RR" may include the internal situations of the IE and information about the egress link from the IE toward the receiver. When Option 1 510 and Option 2 530 are used, information about the time for which the SR or RR packet stays in the IE may be included in the XMR. A method of recording the time r, for which the SR or RR packet stays, in an XMR is equivalent to the method of recording the associated information for a report block in the RTCP RR packet.

In Option 3 550, an XMR report block is transmitted with a separate XMR packet, instead of adding the XMR report block in an SR packet or an RR packet. In the case of periodically reporting an XMR packet, an IE, through which a sender or a receiver makes an initial XMR packet and transmits it, may merge end-to-end QoS by updating the XMR packet. In the case of a specific change in circumstances, rather than the periodic report, the IE having undergone the change in circumstances may generate and transmit an XMR packet.

In Option 1 510, for an initial XMR report block, a sender may make the initial XMR report block and add it in an SR. Likewise, in Option 2 530, for an initial XMR report block, a receiver may make the initial XMR report block and add it in an RR. In this case, the added information may be included in the same form as that of the report block in the RFC3611.

FIG. 6 illustrates a general structure of a report block, according to an embodiment of the present invention.

Referring to FIG. 6, an 8-bit Block Type (BT) is a number for distinguishing a type of report block. In accordance with an embodiment of the present invention, for a block newly designated in an XMR, a new BT number should be received and registered in an Internet Assigned Numbers Authority (IANA). A sender or receiver incapable of identifying the BT is allowed to skip by a block length and process the next report block.

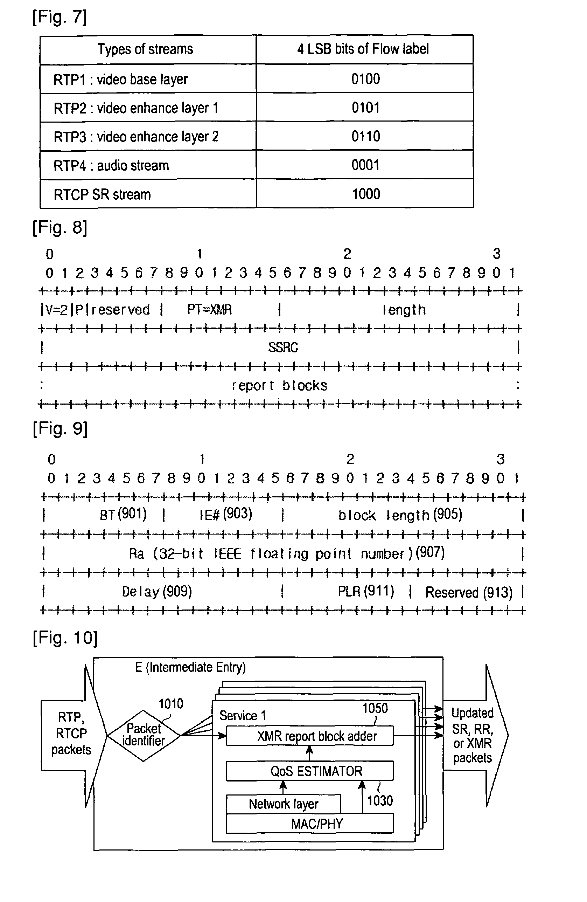

Options 1, 2 and 3 in FIG. 5 require methods of identifying an SR packet, an RR packet, and an XMR packet in the IEs. In IPv4, the packets may be identified using an extended IP header, and in IPv6, the packets may be identified using a flow label. In one real-time multimedia service, different flow label numbers are designated for different streams. For example, the streams may be distinguished as illustrated in FIG. 7, using 4 Least Significant Bit (LSB) bits.

FIG. 7 illustrates 4 LSB bits of an IPv6 flow label for stream identification, according to an embodiment of the present invention.

In Option 3 of FIG. 5, a structure of an XMR packet should be determined, and the structure is generally equal to that of the SR and RR packets. A Packet Type (PT) number, by which the SR and RR packets may be distinguished from each other, should be registered in the IANA.

FIG. 8 illustrates a structure of an RTCP XMR packet, according to an embodiment of the present invention. For a basic structure of an XMR packet, the RTCP XR packet (see RFC3611) described in FIG. 3 may be used. When the RTCP XR packet is used as an XMR packet, a "PT" field in FIG. 8 is designated as 'XMR'. In accordance with an embodiment of the present invention, QoS-related information is delivered by a "report blocks" field in FIG. 8. The "report blocks" field may be realized in a structure of an XMR block, which is described with respect to FIG. 9 below.

In Options 1 and 2 described in FIG. 5, a source address is used as in a mixer (and a translator) defined in the existing RFC 3350 RTP, and may be assigned one SSRC for the RTP stream. In an XMR packet, IP addresses of a sender and a receiver may be generally used as its source address and destination address, like in the SR and RR packets. However, when a stream is newly formed in an IE like the mixer and the translator, an IP address of the IE is determined as a source address and an IP address of the receiver or the sender is determined as a destination address. Likewise, even in Option 3, an IP address of an IE making and sending an XMR packet may be used as a source address.

In Options 1 and 2, a report interval of an RTCP XMR may be identical to the existing RTCP interval, or an interval of an SR or an RR. However, in Option 3, the RTCP XMR is transmitted according to the interval of the IE itself. For example, the transmission method may be divided into a method of transmitting an XMR at regular intervals, and a method of transmitting an XMR when a change in QoS factors is significant. Preferably, the 'regular interval' may be about one second in typical real-time multimedia services.

An XMR block may be realized in the form of an RTCP report block. The XMR block is added in the SR, RR, and XMR packets in Options 1, 2 and 3, respectively. An XMR block may include traffic parameters of TSPEC or FLOWSPEC used in RFC 2210, and QoS parameters included in an RTCP RR. These parameters may include, for example, an available bitrate, a packet loss ratio, a delay, an available buffer size, etc. The traffic parameters may be defined in the TSPEC form. These variables may be delivered in the structure, which is illustrated in FIG. 9 by way example.

FIG. 9 illustrates a structure of an RTCP XMR block, according to an embodiment of the present invention.

Block Type (BT) 901 has 8 bits and represents a number for distinguishing a type of report block. For a block newly designated in an XMR, a new BT number should be received and registered in the IANA. A sender or receiver incapable of identifying the BT is allowed to skip by a block length and process the next report block.

'1' is added to an Intermediate Entity number (IE#) 903 (8 bits) having existed before being added is recorded. If an XMR report block was not present, '1' is recorded.

The information defined in the RFC3611 may be used intact. A block length 905 (16 bits) is represented in bytes including the header.

A method of describing a Token Bucket Rate in RFC 2210 may be used. If an available bitrate (Ra) (32 bits) may not be measured, it is recorded as '0'. In this case, the recorded information is discarded.

The time, for which the report block has arrived at an IE and has been successfully transmitted, is estimated and recorded. A delay 909 includes a queuing delay and a delay caused by retransmission in the link. As a round-trip delay is represented in RFC3611, the delay 909 may be represented in milliseconds with a 16-bit integer. If the delay 909 cannot be measured, it is recorded as '0'. In this case, the recorded information is discarded.

To represent a Packet Loss Ratio (PLR) 911, the same method as the method of representing a loss ratio and a discard ratio in RFC3611 may be used. Specifically, the PLR 911 is represented in an 8-bit integer by being multiplied by 256. For example, if a loss ratio is 5%, the PLR 911 becomes 12.8 by being multiplied by 256 (=0.05 256), and is represented as '12', discarding the decimal point. If the PLR 911 cannot be measured, it is recorded as '0'. In this case, the recorded information is discarded.

A Reserved field 913 (8 bits) is used to add other variables in the future.

The method of designating information (or variables) constituting an XMR block and presenting the information as illustrated in FIG. 9 is provided as an example. New information may be added for other purposes, and its representation method may be determined in a different way. These are not limited in the present invention.

While the method of recording information (or variables) included in an XMR block in each IE has been described above, a method of merging the information contained in the XMR block by a plurality of IEs is described below. An entity for merging the information is called a merger. Generally, in Option 1, a sender serves as a merger. On the other hand, in Option 2, a receiver serves as a merger. However, if needed or possible in both Options 1 and 2, any IE may serve as a merger. In Option 3, all of a sender, a receiver, and an IE may serve as a merger. This method may be used not only in an RTP session, but also in Hypertext Transport Protocol (HTTP) streaming. Information in XMR blocks sent from n IEs may be merged as follows. If a receiver or a sender has added an XMR block, the receiver or the sender is also included in the number of IEs.

Assuming that in an SR, RR, or XMR packet carrying XMR information, the largest IE number is n, if an i-th available bitrate having passed through n IEs is represented as $R_{ai}$, the finally available bitrate ($R_a$) can be calculated using Equation (1) below.

$$R_a = \min_{i=1,\cdots,n} R_{ai} \quad \ldots \ldots \ldots \ldots (1)$$

In the same condition, using each PLR($P_i$), the final packet loss ratio(P) may be calculated in accordance with Equation (2).

$$P = 1 - \prod_{i=1}^{n}(1 - P_i) \quad \ldots \ldots \ldots \ldots (2)$$

In the same condition, using each one-way delay Di, the final delay(D) can be calculated in accordance with Equation (3).

$$D = \sum_{i=1}^{n} D_i \quad \ldots \ldots \ldots \ldots (3)$$

In the same condition, using each available buffer Bi, the final available buffer size (B) may be calculated in accordance with Equation (4).

$$B = \min_{i=1,\cdots,n} B_i \quad \ldots \ldots \ldots \ldots (4)$$

In Option 1, a receiver includes a merged XMR block in an RR packet, and delivers it to a sender or a MANE, enabling a QoS adaptation operation to be achieved. In Option 2, a sender or a MANE merges an XMR block, enabling a QoS adaptation operation to be achieved right away. In Option 3, if an XMR packet is transmitted toward a receiver, the receiver merges the XMR block, includes it in an RR packet, and delivers the RR packet to a sender or an MANE as in Option 1, enabling a QoS adaptation operation to be achieved. On the other hand, if an XMR packet is transmitted toward a sender, the sender or the MANE merges the XMR block as in Option 2, enabling a QoS adaptation operation to be achieved right away.

An XMR should have compatibility with the RFC 2327 (Session Description Protocol). In Options 1 and 2, the SDP parameter and attribute name are allowed to be treated like the conventional attribute of the SR or RR packet, and in Option 3, a new attribute is defined. The SDP attribute of RTCP XMR blocks should be defined according to the RFC 2234 Augmented Backus-Naur Form (ABNF). The method of RFC 3611 may be used.

For security matters, the method disclosed in RFC 3550 RTP Appendix B may be used for Secure RTP (SRTP).

To improve the quality of real-time multimedia services, it is important to control QoS according to the network situations. To this end, in the existing RTP standard, the end-to-end QoS is measured using the RTCP. A sender controls the quality of multimedia streams according to the QoS measured using the RTCP. Specifically, the sender reduces a bitrate in case of an increase in the delay, and uses a loss reduction method in case of occurrence of a packet loss.

However, when the existing RTCP is used, only the end-to-end QoS parameters are measured, as a lower layer under the network layer is considered as a black box. Regarding the measurement of the RTCP parameters, feedback thereof is slow because it is a measurement for the delay and the loss, causing uncertainty. On the contrary, if the QoS parameters are measured using channel parameters of the MAC/PHY layer, which are causes for determining QoS values, the feedback thereof is faster, reducing the uncertainty.

In the wireless communication system, a method of measuring a round-trip time using the existing RTCP, dividing the measured round-trip time in half, and using it as a one-way delay is an incorrect approach, because the uplink and downlink of mobile channels are totally different in terms of the protocol and characteristics. Even in the case of a packet loss ratio, since the packet loss occurs at random, its value is uncertain. To reduce the uncertainty, the measurement time should be increased, which, however, causes a delay in feedback. Therefore, it is much more effective to estimate QoS factors using the MAC/PHY characteristics, which are the direct cause of the packet loss.

FIG. 10 illustrates a configuration of a network entity that generates an RTCP XMR block, according to an embodiment of the present invention. The above-described IE may be realized as shown in FIG. 10.

Referring to FIG. 10, an IE appropriately adds an XMR block, for each service. A packet identifier 1010 identifies a service type of a relevant packet. The service type can be identified by an extended header in IPv4, and by a flow label in IPv6. To this end, it is necessary to make it possible to distinguish RTCP packets. Using the parameters measured in the network layer and the MAC/PHY layers, a QoS estimator 1030 calculates parameters contained in the blocks. The calculation is different according to characteristics of the MAC/PHY and network layers. However, as to the values contained in the XMR blocks, information in a predefined unit is contained in a predefined format. An XMR adder 1050 appropriately adds XMR blocks, for each service. The packet identifier 1010, the QoS estimator 1030, and the XMR adder 1050 may be implemented with one or multiple controllers. Although not illustrated, the network entity in FIG. 10 includes a sender and a receiver for transmission and reception of XMRs.

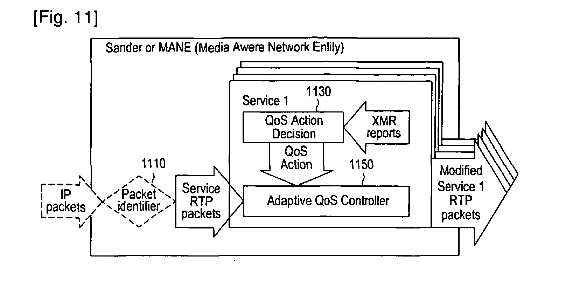

FIG. 11 illustrates a configuration of a network entity that performs QoS control using RTCP XMR information, according to an embodiment of the present invention. The network entity in FIG. 11 corresponds to, for example, a sender and a MANE.

Referring to FIG. 11, a packet identifier 1110 identifies a service type of a relevant packet. The service type can be identified by an extended header in IPv4, and by a flow label in IPv6. The sender and the MANE perform QoS control according to the merged XMR report. The XMR report merged by a merger is provided to a QoS Action Decision block 1130. In Options 1 and 2, the XMR reports are merged with each service in the receiver and the sender, respectively. The merged XMR report includes information such as an available bitrate, a packet loss ratio, and a delay. The QoS Action Decision block 1130 decides a QoS action. The QoS action includes media filtering, rate control, and FEC packet addition. Accordingly, an Adaptive QoS controller 1150 filters out any RTP streams, or adds an FEC packet in any RTP streams. The sender does not include the dotted block like the packet identifier 1110. The packet identifier 1110, the QoS Action Decision block 1130, and the Adaptive QoS controller 1150 may be realized with one or multiple controllers. Although not illustrated, the network entity in FIG. 11 includes a sender and/or a receiver for transmission and reception of XMRs.

The sender performs adaptive QoS control using RTCP XMRs. Specifically, the sender estimates end-to-end QoS by merging information written in RTCP XMR blocks, and performs media filtering, rate control, and FEC level control according to the estimation results.

The MANE also performs adaptive QoS control using the RTCP XMRs. Specifically, the MANE estimates end-to-end QoS by merging information written in RTCP XMR blocks, and performs media filtering, rate control, and FEC level control according to the estimation results. In the case of QoS differentiated multicast transmission in which different networks have different QoS levels, it is possible to measure ever-changing characteristics of each network using the RTCP XMRs, and provide the possible best-quality services using transmission resources available based on the measurement results.

While the invention has been shown and described with reference to certain embodiments thereof, it will be understood by those skilled in the art that various changes in form and detail may be made therein without departing from the scope of the invention as defined by the appended claims.

**Claims**

1. A method for reporting quality of service, QoS, control-related information in a network, comprising the steps of, in an intermediate network entity located within an end-to-end path:

   receiving a first report packet including QoS control-related information from a first network entity located within the end-to-end path;
   measuring a channel state at a media access control, MAC, layer, a physical, PHY, layer, and a network layer of the intermediate network entity respectively;
   generating a second report packet including QoS control-related information associated with the intermediate network entity by updating the received first report packet based on the channel state measured at the MAC, PHY, and network layers; and
   transmitting the second report packet to a second network entity, the second network entity being located within the end-to-end path.

2. The method of claim 1, wherein the QoS control-related information comprises at least one of a packet loss ratio, a delay, and an available bitrate, all of which are associated with the intermediate network entity.

3. The method of claim 1, wherein the QoS control-related information is generated in a form of a real-time transport control protocol, RTCP, report block.

4. The method of claim 1, wherein the QoS control-related information is generated in a form of an Internet Protocol, IP, packet including a real-time transport control protocol, RTCP, report block.

5. The method of claim 1, wherein the QoS control-related information is transmitted in a real-time transport control protocol, RTCP, packet including an RTCP report block.

6. The method of claim 5, wherein the RTCP packet is at least one of a sender report, SR, packet, a receiver report, RR, packet, and an extended intermediate report, XMR, packet.

7. The method of claim 1, wherein the intermediate network entity is at least one of a router, a media aware network entity, MANE, and a base station of a wireless communication system.

8. A network entity for reporting quality of service, QoS, control-related information in a network, comprising:

   a transceiver configured to receive and transmit a packet over the network; and
   a controller configured to control operations of:

   receiving a first report packet including QoS control-related information from a first network entity located within the end-to-end path,
   measuring a channel state at a media access control, MAC, layer, a physical, PHY, layer, and a network layer of the network entity respectively, the network entity being an intermediate network entity located within an end-to-end path,
   generating a second report packet including QoS control-related information associated with the intermediate network entity by updating the received first report packet based on the channel state measured at the MAC, PHY, and network layers, and
   transmitting the generated second report packet to a second network entity, the second network entity being located within the end-to-end path.

9. The network entity of claim 8, wherein the QoS control-related information comprises at least one of a packet loss ratio, a delay, and an available bitrate, all of which are associated with the network entity.

10. The network entity of claim 8, wherein the controller is configured to generate the report packet including the QoS control-related information in a form of a real-time transport control protocol, RTCP, report block.

11. The network entity of claim 8, wherein the controller is configured to generate the report packet including the QoS control-related information in a form of an Internet Protocol, IP, packet including a real-time transport control protocol, RTCP, report block.

12. The network entity of claim 8, wherein the controller is configured to generate the report packet including the QoS control-related information in a form of an RTCP packet including a real-time transport control protocol, RTCP, report block.

13. The network entity of claim 12, wherein the RTCP packet is at least one of a sender report, SR, packet, a receiver report, RR, packet, and an extended intermediate report, XMR, packet.

14. The network entity of claim 8, wherein the network entity is at least one of a router, a media aware network entity, MANE, and a base station of a wireless communication system.

15. The network entity of claim 8, wherein the controller is configured to generate the report packet including the QoS control-related information for each type of service individually.

**Patentansprüche**

1. Verfahren zum Melden von QoS-(Quality of Service)-steuerungsbezogenen Informationen in einem Netzwerk, das die folgenden Schritte in einer in einem End-zu-End-Pfad befindlichen Zwischennetzwerkeinheit beinhaltet:

   Empfangen eines ersten Meldepakets mit QoS-steuerungsbezogenen Informationen von einer in dem End-zu-End-Pfad befindlichen ersten Netzwerkeinheit;
   Messen eines Kanalzustands an einer MAC-(Media Access Control)-Schicht, einer PHY-(physical)-Schicht und einer Netzwerkschicht der Zwischennetzwerkeinheit;
   Erzeugen eines zweiten Meldepakets mit QoS-steuerungsbezogenen Informationen, die mit der Zwischennetzwerkeinheit assoziiert sind, durch Aktualisieren des empfangenen ersten Meldepakets auf der Basis des an der MAC-, PHY- und Netzwerkschichten gemessenen Kanalzustands; und
   Senden des zweiten Meldepakets zu einer zweiten Netzwerkeinheit, wobei sich die zweite Netzwerkeinheit innerhalb des End-zu-End-Pfades befindet.

2. Verfahren nach Anspruch 1, wobei die QoS-steuerungsbezogenen Informationen wenigstens eines aus Paketverlustverhältnis, Verzögerung und verfügbarer Bitrate beinhalten, die alle mit der Zwischennetzwerkeinheit assoziiert sind.

3. Verfahren nach Anspruch 1, wobei die QoS-steuerungsbezogenen Informationen in Form eines RTCP-(Real-Time Transport Control Protocol)-Meldeblocks erzeugt werden.

4. Verfahren nach Anspruch 1, wobei die QoS-steuerungsbezogenen Informationen in Form eines IP-(Internet Protocol)-Pakets einschließlich eines RTCP-(Real-Time Transport Control Protocol)-Meldeblocks erzeugt werden.

5. Verfahren nach Anspruch 1, wobei die QoS-steuerungsbezogenen Informationen in einem RTCP-(Real-Time Transport Control Protocol)-Paket einschließlich eines RTCP-Meldeblocks gesendet werden.

6. Verfahren nach Anspruch 5, wobei das RTCP-Paket wenigstens eines aus SR-(Sender Report)-Paket, RR-(Receiver Report)-Paket und XMR-(Extended Intermediate Report)-Paket ist.

7. Verfahren nach Anspruch 1, wobei die Zwischennetzwerkeinheit wenigstens eines aus einem Router, einer MANE (Media Aware Network Entity) und einer Basisstation eines drahtlosen Kommunikationssystems ist.

8. Netzwerkeinheit zum Melden von QoS-(Quality of Service)-steuerungsbezogenen Informationen in einem Netzwerk, die Folgendes umfasst:

   einen Transceiver, konfiguriert zum Empfangen und Senden eines Pakets über das Netzwerk; und
   einen Controller, konfiguriert zum Steuern der folgenden Operationen:

Empfangen eines ersten Meldepakets einschließlich QoS-steuerungsbezogenen Informationen von einer in dem End-zu-End-Pfad befindlichen Netzwerkeinheit,

Messen eines Kanalzustands an einer MAC-(Media Access Control)-Schicht, einer PHY-(physical)-Schicht und einer Netzwerkschicht der Netzwerkeinheit, wobei die Netzwerkeinheit eine in einem End-zu-End-Pfad befindliche Zwischennetzwerkeinheit ist,

Erzeugen eines zweiten Meldepakets einschließlich QoS-steuerungsbezogenen Informationen, die mit der Zwischennetzwerkeinheit assoziiert sind, durch Aktualisieren des empfangenen ersten Meldepakets auf der Basis des an der MAC-, PHY- und Netzwerkschicht gemessenen Kanalzustands, und

Senden des erzeugten zweiten Meldepakets zu einer zweiten Netzwerkeinheit, wobei sich die zweite Netzwerkeinheit in dem End-zu-End-Pfad befindet.

9. Netzwerkeinheit nach Anspruch 8, wobei die QoS-steuerungsbezogenen Informationen wenigstens eines aus Paketverlustverhältnis, Verzögerung und verfügbarer Bitrate beinhalten, die alle mit der Netzwerkeinheit assoziiert sind.

10. Netzwerkeinheit nach Anspruch 8, wobei der Controller zum Erzeugen des Meldepakets mit den QoS-steuerungsbezogenen Informationen in Form eines RTCP-(Real-Time Transport Control Protocol)-Meldeblocks konfiguriert ist.

11. Netzwerkeinheit nach Anspruch 8, wobei der Controller zum Erzeugen des Meldepakets einschließlich der QoS-steuerungsbezogenen Informationen in Form eines IP-(Internet Protocol)-Pakets einschließlich eines RTCP-(Real-Time Transport Control Protocol)-Meldeblocks konfiguriert ist.

12. Netzwerkeinheit nach Anspruch 8, wobei der Controller zum Erzeugen des Meldepakets einschließlich der QoS-steuerungsbezogenen Informationen in Form eines RTCP-Pakets einschließlich eines RTCP-(Real-Time Transport Control Protocol)-Meldeblocks konfiguriert ist.

13. Netzwerkeinheit nach Anspruch 12, wobei das RTCP-Paket wenigstens eines aus einem SR-(Sender Report)-Paket, einem RR-(Receiver Report)-Paket und einem XMR-(Extended Intermediate Report)-Paket ist.

14. Netzwerkeinheit nach Anspruch 8, wobei die Netzwerkeinheit wenigstens eines aus einem Router, einer MANE (Media Aware Network Entity) und einer Basisstation eines drahtlosen Kommunikationssystems ist.

15. Netzwerkeinheit nach Anspruch 8, wobei der Controller zum Erzeugen des Meldepakets einschließlich der QoS-steuerungsbezogenen Informationen für jeden Service-Typ individuell konfiguriert ist.

**Revendications**

1. Un procédé de signalement d'informations relatives au contrôle d'une qualité de service, QoS, dans un réseau, comprenant les opérations suivantes, dans une entité de réseau intermédiaire située à l'intérieur d'un trajet de bout en bout :

   la réception d'un premier paquet de signalement contenant des informations relatives au contrôle d'une QoS à partir d'une première entité de réseau située à l'intérieur du trajet de bout en bout,

   la mesure d'un état de canal au niveau d'une couche de commande d'accès au support, MAC, d'une couche physique, PHY, et d'une couche de réseau de l'entité de réseau intermédiaire respectivement,

   la génération d'un deuxième paquet de signalement contenant des informations relatives au contrôle d'une QoS associées à l'entité de réseau intermédiaire par l'actualisation du premier paquet de signalement reçu en fonction de l'état de canal mesuré au niveau des couches MAC, PHY et de réseau, et

   la transmission du deuxième paquet de signalement à une deuxième entité de réseau, le deuxième entité de réseau étant située à l'intérieur du trajet de bout en bout.

2. Le procédé selon la Revendication 1, où les informations relatives au contrôle d'une QoS comprennent au moins un élément parmi un rapport de perte de paquets, un retard et un débit binaire disponible, tous ces éléments étant associés à l'entité de réseau intermédiaire.

3. Le procédé selon la Revendication 1, où les informations relatives au contrôle d'une QoS sont générées sous la forme d'un bloc de signalement de protocole de commande de transport en temps réel, RTCP.

4. Le procédé selon la Revendication 1, où les informations relatives au contrôle d'une QoS sont générées sous la forme d'un paquet de protocole Internet, IP, contenant un bloc de signalement de protocole de commande de transport en temps réel, RTCP.

5. Le procédé selon la Revendication 1, où les informations relatives au contrôle d'une QoS sont transmises dans un paquet de protocole de commande de transport en temps réel, RTCP, contenant un bloc de signalement RTCP.

6. Le procédé selon la Revendication 5, où le paquet RTCP est au moins un paquet parmi un paquet de signalement d'expéditeur, SR, un paquet de signalement de récepteur, RR, et un paquet de signalement intermédiaire étendu, XMR.

7. Le procédé selon la Revendication 1, où l'entité de réseau intermédiaire est au moins un élément parmi un routeur, une entité de réseau sensible aux supports, MANE, et une station de base d'un système de communication sans fil.

8. Une entité de réseau destinée au signalement d'informations relatives au contrôle d'une qualité de service, QoS, dans un réseau, comprenant :

   un émetteur-récepteur configuré de façon à recevoir et émettre un paquet par l'intermédiaire du réseau, et
   un dispositif de commande configuré de façon à commander les opérations suivantes :

   la réception d'un premier paquet de signalement contenant des informations relatives au contrôle d'une QoS à partir d'une première entité de réseau située à l'intérieur du trajet de bout en bout,
   la mesure d'un état de canal au niveau d'une couche de commande d'accès au support, MAC, d'une couche physique, PHY, et d'une couche de réseau de l'entité de réseau respectivement, l'entité de réseau étant une entité de réseau intermédiaire située à l'intérieur d'un trajet de bout en bout,
   la génération d'un deuxième paquet de signalement contenant des informations relatives au contrôle d'une QoS associées à l'entité de réseau intermédiaire par l'actualisation du premier paquet de signalement reçu en fonction de l'état de canal mesuré au niveau des couches MAC, PHY et de réseau, et
   la transmission du deuxième paquet de signalement généré à une deuxième entité de réseau, la deuxième entité de réseau étant située à l'intérieur du trajet de bout en bout.

9. L'entité de réseau selon la Revendication 8, où les informations relatives au contrôle d'une QoS comprennent au moins un élément parmi un rapport de perte de paquets, un retard et un débit binaire disponible, tous ces éléments étant associés à l'entité de réseau.

10. L'entité de réseau selon la Revendication 8, où le dispositif de commande est configuré de façon à générer le paquet de signalement contenant les informations relatives au contrôle d'une QoS sous la forme d'un bloc de signalement de protocole de commande de transport en temps réel, RTCP.

11. L'entité de réseau selon la Revendication 8, où le dispositif de commande est configuré de façon à générer le paquet de signalement contenant les informations relatives au contrôle d'une QoS sous la forme d'un paquet de protocole Internet, IP, contenant un bloc de signalement de protocole de commande de transport en temps réel, RTCP.

12. L'entité de réseau selon la Revendication 8, où le dispositif de commande est configuré de façon à générer le paquet de signalement contenant les informations relatives au contrôle d'une QoS sous la forme d'un paquet RTCP contenant un bloc de signalement de protocole de commande de transport en temps réel, RTCP.

13. L'entité de réseau selon la Revendication 12, où le paquet RTCP est au moins un paquet parmi un paquet de signalement d'expéditeur, SR, un paquet de signalement de récepteur, RR, et un paquet de signalement intermédiaire étendu, XMR.

14. L'entité de réseau selon la Revendication 8, où l'entité de réseau est au moins un élément parmi un routeur, une entité de réseau sensible aux supports, MANE, et une station de base d'un système de communication sans fil.

15. L'entité de réseau selon la Revendication 8, où le dispositif de commande est configuré de façon à générer le paquet de signalement contenant les informations relatives au contrôle d'une QoS pour chaque type de service individuellement.

[Fig. 1]

```
              0                   1                   2                   3
              0 1 2 3 4 5 6 7 8 9 0 1 2 3 4 5 6 7 8 9 0 1 2 3 4 5 6 7 8 9 0 1
             +-+-+-+-+-+-+-+-+-+-+-+-+-+-+-+-+-+-+-+-+-+-+-+-+-+-+-+-+-+-+-+-+
   header    |V=2|P|   RC    |   PT=SR=200   |             length            |
             +-+-+-+-+-+-+-+-+-+-+-+-+-+-+-+-+-+-+-+-+-+-+-+-+-+-+-+-+-+-+-+-+
             |                         SSRC of sender                        |
             +=+=+=+=+=+=+=+=+=+=+=+=+=+=+=+=+=+=+=+=+=+=+=+=+=+=+=+=+=+=+=+=+
   sender    |              NTP timestamp, most significant word             |
   info      +-+-+-+-+-+-+-+-+-+-+-+-+-+-+-+-+-+-+-+-+-+-+-+-+-+-+-+-+-+-+-+-+
             |              NTP timestamp, least significant word            |
             +-+-+-+-+-+-+-+-+-+-+-+-+-+-+-+-+-+-+-+-+-+-+-+-+-+-+-+-+-+-+-+-+
             |                         RTP timestamp                         |
             +-+-+-+-+-+-+-+-+-+-+-+-+-+-+-+-+-+-+-+-+-+-+-+-+-+-+-+-+-+-+-+-+
             |                     sender's packet count                     |
             +-+-+-+-+-+-+-+-+-+-+-+-+-+-+-+-+-+-+-+-+-+-+-+-+-+-+-+-+-+-+-+-+
             |                      sender's octet count                     |
             +=+=+=+=+=+=+=+=+=+=+=+=+=+=+=+=+=+=+=+=+=+=+=+=+=+=+=+=+=+=+=+=+
   report    |                  SSRC_1 (SSRC of first source)                |
   block      +-+-+-+-+-+-+-+-+-+-+-+-+-+-+-+-+-+-+-+-+-+-+-+-+-+-+-+-+-+-+-+-+
   1         | fraction lost |        cumulative number of packets lost      |
             +-+-+-+-+-+-+-+-+-+-+-+-+-+-+-+-+-+-+-+-+-+-+-+-+-+-+-+-+-+-+-+-+
             |              extended highest sequence number received        |
             +-+-+-+-+-+-+-+-+-+-+-+-+-+-+-+-+-+-+-+-+-+-+-+-+-+-+-+-+-+-+-+-+
             |                       inter-arrival jitter                    |
             +-+-+-+-+-+-+-+-+-+-+-+-+-+-+-+-+-+-+-+-+-+-+-+-+-+-+-+-+-+-+-+-+
             |                         last SR (LSR)                         |
             +-+-+-+-+-+-+-+-+-+-+-+-+-+-+-+-+-+-+-+-+-+-+-+-+-+-+-+-+-+-+-+-+
             |                   delay since last SR (DLSR)                  |
             +=+=+=+=+=+=+=+=+=+=+=+=+=+=+=+=+=+=+=+=+=+=+=+=+=+=+=+=+=+=+=+=+
   report    |                  SSRC_2 (SSRC of second source)               |
   block      +-+-+-+-+-+-+-+-+-+-+-+-+-+-+-+-+-+-+-+-+-+-+-+-+-+-+-+-+-+-+-+-+
   2         :                              ...                              :
             +=+=+=+=+=+=+=+=+=+=+=+=+=+=+=+=+=+=+=+=+=+=+=+=+=+=+=+=+=+=+=+=+
             |                   profile-specific extensions                 |
             +-+-+-+-+-+-+-+-+-+-+-+-+-+-+-+-+-+-+-+-+-+-+-+-+-+-+-+-+-+-+-+-+
```

[Fig. 2]

```
                    0                   1                   2                   3
                    0 1 2 3 4 5 6 7 8 9 0 1 2 3 4 5 6 7 8 9 0 1 2 3 4 5 6 7 8 9 0 1
                    +-+-+-+-+-+-+-+-+-+-+-+-+-+-+-+-+-+-+-+-+-+-+-+-+-+-+-+-+-+-+-+-+
           header  |V=2|P|   RC    |   PT=RR=201   |             length            |
                    +-+-+-+-+-+-+-+-+-+-+-+-+-+-+-+-+-+-+-+-+-+-+-+-+-+-+-+-+-+-+-+-+
                    |                     SSRC of packet sender                    |
                    +=+=+=+=+=+=+=+=+=+=+=+=+=+=+=+=+=+=+=+=+=+=+=+=+=+=+=+=+=+=+=+=+
           report  |                 SSRC_1 (SSRC of first source)                 |
           block    +-+-+-+-+-+-+-+-+-+-+-+-+-+-+-+-+-+-+-+-+-+-+-+-+-+-+-+-+-+-+-+-+
             1     | fraction lost |     cumulative number of packets lost         |
                    +-+-+-+-+-+-+-+-+-+-+-+-+-+-+-+-+-+-+-+-+-+-+-+-+-+-+-+-+-+-+-+-+
                    |             extended highest sequence number received        |
                    +-+-+-+-+-+-+-+-+-+-+-+-+-+-+-+-+-+-+-+-+-+-+-+-+-+-+-+-+-+-+-+-+
                    |                      interarrival jitter                     |
                    +-+-+-+-+-+-+-+-+-+-+-+-+-+-+-+-+-+-+-+-+-+-+-+-+-+-+-+-+-+-+-+-+
                    |                         last SR (LSR)                        |
                    +-+-+-+-+-+-+-+-+-+-+-+-+-+-+-+-+-+-+-+-+-+-+-+-+-+-+-+-+-+-+-+-+
                    |                   delay since last SR (DLSR)                 |
                    +=+=+=+=+=+=+=+=+=+=+=+=+=+=+=+=+=+=+=+=+=+=+=+=+=+=+=+=+=+=+=+=+
           report  |                 SSRC_2 (SSRC of second source)                |
           block    +-+-+-+-+-+-+-+-+-+-+-+-+-+-+-+-+-+-+-+-+-+-+-+-+-+-+-+-+-+-+-+-+
             2     :                             ...                              :
                    +=+=+=+=+=+=+=+=+=+=+=+=+=+=+=+=+=+=+=+=+=+=+=+=+=+=+=+=+=+=+=+=+
                    |                   profile-specific extensions                |
                    +-+-+-+-+-+-+-+-+-+-+-+-+-+-+-+-+-+-+-+-+-+-+-+-+-+-+-+-+-+-+-+-+
```

[Fig. 3]

```
        0                   1                   2                   3
        0 1 2 3 4 5 6 7 8 9 0 1 2 3 4 5 6 7 8 9 0 1 2 3 4 5 6 7 8 9 0 1
        +-+-+-+-+-+-+-+-+-+-+-+-+-+-+-+-+-+-+-+-+-+-+-+-+-+-+-+-+-+-+-+-+
       |V=2|P|reserved |   PT=XR=207   |             length            |
        +-+-+-+-+-+-+-+-+-+-+-+-+-+-+-+-+-+-+-+-+-+-+-+-+-+-+-+-+-+-+-+-+
       |                             SSRC                              |
        +-+-+-+-+-+-+-+-+-+-+-+-+-+-+-+-+-+-+-+-+-+-+-+-+-+-+-+-+-+-+-+-+
       :                         report blocks                         :
        +-+-+-+-+-+-+-+-+-+-+-+-+-+-+-+-+-+-+-+-+-+-+-+-+-+-+-+-+-+-+-+-+
```

[Fig. 4]

```
  31            24 23         16 15          8 7          0
     +-+-+-+-+-+-+-+-+-+-+-+-+-+-+-+-+-+-+-+-+-+-+-+-+-+-+-+-+-+-+-+
  1  | 0 (a) |    Unused         |            10 (b)          |
     +-+-+-+-+-+-+-+-+-+-+-+-+-+-+-+-+-+-+-+-+-+-+-+-+-+-+-+-+-+-+-+
  2  |   2  (c)    |0| reserved   |            9 (d)           |
     +-+-+-+-+-+-+-+-+-+-+-+-+-+-+-+-+-+-+-+-+-+-+-+-+-+-+-+-+-+-+-+
  3  |  127 (e)    |   0 (f)      |            5 (g)           |
     +-+-+-+-+-+-+-+-+-+-+-+-+-+-+-+-+-+-+-+-+-+-+-+-+-+-+-+-+-+-+-+
  4  |  Token Bucket Rate [r] (32-bit IEEE floating point number)  |
     +-+-+-+-+-+-+-+-+-+-+-+-+-+-+-+-+-+-+-+-+-+-+-+-+-+-+-+-+-+-+-+
  5  |  Token Bucket Size [b] (32-bit IEEE floating point number)  |
     +-+-+-+-+-+-+-+-+-+-+-+-+-+-+-+-+-+-+-+-+-+-+-+-+-+-+-+-+-+-+-+
  6  |  Peak Data Rate [p] (32-bit IEEE floating point number)     |
     +-+-+-+-+-+-+-+-+-+-+-+-+-+-+-+-+-+-+-+-+-+-+-+-+-+-+-+-+-+-+-+
  7  |  Minimum Policed Unit [m] (32-bit integer)                  |
     +-+-+-+-+-+-+-+-+-+-+-+-+-+-+-+-+-+-+-+-+-+-+-+-+-+-+-+-+-+-+-+
  8  |  Maximum Packet Size [M]  (32-bit integer)                  |
     +-+-+-+-+-+-+-+-+-+-+-+-+-+-+-+-+-+-+-+-+-+-+-+-+-+-+-+-+-+-+-+
  9  |   130 (h)   |  0 (i)    |            2 (j)               |
     +-+-+-+-+-+-+-+-+-+-+-+-+-+-+-+-+-+-+-+-+-+-+-+-+-+-+-+-+-+-+-+
 10  |  Rate [R]   (32-bit IEEE floating point number)            |
     +-+-+-+-+-+-+-+-+-+-+-+-+-+-+-+-+-+-+-+-+-+-+-+-+-+-+-+-+-+-+-+
 11  |  Slack Term [S]  (32-bit integer)                          |
     +-+-+-+-+-+-+-+-+-+-+-+-+-+-+-+-+-+-+-+-+-+-+-+-+-+-+-+-+-+-+-+
```

[Fig. 5]

Option 1 (510)

```
+--------+  SR   +------+  SR'  +------+  SR"  +----------+
| Sender |------>| IE 1 |------>| IE 2 |------>| Receiver |
+--------+       +------+       +------+       +----------+
```

Option 2 (530)

```
+--------+  RR"  +------+  RR'  +------+  RR   +----------+
| Sender |<------| IE 1 |<------| IE 2 |<------| Receiver |
+--------+       +------+       +------+       +----------+
```

Option 3 (550)

```
+--------+ XMR1,2 +------+ XMR1,2 +------+ XMR1,2 +----------+
| Sender |<------>| IE 1 |<------>| IE 2 |<------>| Receiver |
+--------+        +------+        +------+        +----------+
```

[Fig. 6]

```
  0                   1                   2                   3
  0 1 2 3 4 5 6 7 8 9 0 1 2 3 4 5 6 7 8 9 0 1 2 3 4 5 6 7 8 9 0 1
 +-+-+-+-+-+-+-+-+-+-+-+-+-+-+-+-+-+-+-+-+-+-+-+-+-+-+-+-+-+-+-+-+
 |       BT      | type-specific |          block length         |
 +-+-+-+-+-+-+-+-+-+-+-+-+-+-+-+-+-+-+-+-+-+-+-+-+-+-+-+-+-+-+-+-+
 |.                type-specific block contents                 |
 +-+-+-+-+-+-+-+-+-+-+-+-+-+-+-+-+-+-+-+-+-+-+-+-+-+-+-+-+-+-+-+-+
```

[Fig. 7]

| Types of streams | 4 LSB bits of Flow label |
|---|---|
| RTP1 : video base layer | 0100 |
| RTP2 : video enhance layer 1 | 0101 |
| RTP3 : video enhance layer 2 | 0110 |
| RTP4 : audio stream | 0001 |
| RTCP SR stream | 1000 |

[Fig. 8]

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|V=2|P|reserved |    PT=XMR     |            length             |
+-+-+-+-+-+-+-+-+-+-+-+-+-+-+-+-+-+-+-+-+-+-+-+-+-+-+-+-+-+-+-+-+
|                             SSRC                              |
+-+-+-+-+-+-+-+-+-+-+-+-+-+-+-+-+-+-+-+-+-+-+-+-+-+-+-+-+-+-+-+-+
:                         report blocks                         :
+-+-+-+-+-+-+-+-+-+-+-+-+-+-+-+-+-+-+-+-+-+-+-+-+-+-+-+-+-+-+-+-+
```

[Fig. 9]

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|      BT (901)    |    IE# (903)    |      block length (905)      |
+-+-+-+-+-+-+-+-+-+-+-+-+-+-+-+-+-+-+-+-+-+-+-+-+-+-+-+-+-+-+-+-+
|         Ra (32-bit IEEE floating point number) (907)          |
+-+-+-+-+-+-+-+-+-+-+-+-+-+-+-+-+-+-+-+-+-+-+-+-+-+-+-+-+-+-+-+-+
|         Delay (909)           |    PLR (911)   | Reserved (913) |
+-+-+-+-+-+-+-+-+-+-+-+-+-+-+-+-+-+-+-+-+-+-+-+-+-+-+-+-+-+-+-+-+
```

[Fig. 10]

[Fig. 11]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007280127 A
- US 2004066753 A